# EUROPÄISCHE PATENTSCHRIFT

(11) **EP 2 544 544 B1**
(45) Veröffentlichungstag und Bekanntmachung des Hinweises auf die Patenterteilung: **02.03.2016**
(21) Anmeldenummer: 11714238.0
(22) Anmeldetag: 08.03.2011
(51) Int. Cl.: A21B 5/04, A21B 7/00

(54) **VERFAHREN UND ANLAGE ZUR AUTOMATISIERTEN HERSTELLUNG VON BAUMKUCHEN BZW. VON KUCHEN NACH BAUMKUCHENART**
METHOD AND ARRANGEMENT FOR THE AUTOMATISED PRODUCTION OF TREE CAKES OR CAKES IN THE FORM OF A TREE CAKE
PROCÉDÉ ET INSTALLATION POUR LA PRODUCTION AUTOMATISÉE DE GÂTEAUX À LA BROCHE OU DE GÂTEAUX DU TYPE GÂTEAU À LA BROCHE

(30) Priorität: 09.03.2010 DE 102010002692
(43) Veröffentlichungstag der Anmeldung: 16.01.2013
(73) Patentinhaber: Kuchenmeister GmbH, 59494 Soest (DE)
(72) Erfinder: JANK, Rüdiger, 16548 Glienicke (DE); TROCKELS, Hans-Günter, 59494 Soest (DE)
(74) Vertreter: Maikowski & Ninnemann
(86) Internationale Anmeldenummer: PCT/EP2011/053474
(87) Internationale Veröffentlichungsnummer: WO 2011/110563

(56) Entgegenhaltungen:
- EP-A1- 0 770 328
- EP-A2- 1 486 121
- WO-A1-2006/125260
- DD-A1- 242 745
- DE-A1- 4 302 091
- DE-C1- 4 310 095
- DE-U1-202008 012 234
- JP-A- 6 094 375

## Beschreibung

Die Erfindung betrifft ein automatisiertes Verfahren zum Herstellen von Baumkuchen bzw. von Kuchen nach Baumkuchenart nach dem Oberbegriff des Anspruchs 1 sowie eine Anlage zum Herstellen von Baumkuchen bzw. von Kuchen nach Baumkuchenart nach dem Oberbegriff des Anspruchs 9.

Aus der DE 43 10 095 C1 und der DE 43 02 091 A1 sind Verfahren und Anlagen zur kontinuierlichen Herstellung von Baumkuchen bzw. von Kuchen nach Baumkuchenart bekannt. Bei diesen werden mehrere um die eigenen Achsen rotierende Backwalzen nacheinander abwechselnd durch mit Teigmasse gefüllte Massebehälter und durch Backkammern geführt und das entstandene Backgut wird anschließend von der Backwalze getrennt.

Nachteilig bei den beschriebenen Verfahren ist, dass die kontinuierliche Fahrweise u. U. relativ viel Energie verbrauchen.

Aus der WO 2006/125260 A1 ist eine individuelle Kodierung von Papierauflagen in Backverfahren bekannt, welche zum Steuern des Ofens genutzt wird. Die JP 6 094375 A offenbart individuell kodierte Backauflagen.

Der Erfindung liegt die Aufgabe zugrunde, energieeffiziente und weniger investive Verfahren und Anlagen zu schaffen.

Erfindungsgemäß wird das durch die Merkmale der Ansprüche 1 und 7 erreicht.

Durch den Einsatz individualisierender Kennelemente, die für eine Steuerungsvorrichtung auslesbar sind, ist eine flexible und insbesondere kontinuierliche Steuerung der Anlage möglich, denn damit ist es möglich mindestens einen Betriebsparameter mindestens einer Backwalze und/oder ein Betriebsparameter des mindestens einen Massebehälters in Abhängigkeit vom Auslesen der Kennelemente, d.h. gezielt zu verändern.

Dabei wird erfindungsgemäß eine Handhabungsvorrichtung, insbesondere ein Roboter, zur gezielten Bewegung mindestens einer Backwalze und/oder des mindestens einen Massebehälters in Abhängigkeit von dem Ergebnis des Auslesens mindestens eines Kennelements eingesetzt. Durch die Handhabungsvorrichtung ist es möglich, die Anlage flexibel und automatisch zu betreiben. So kann mindestens eine Backwalze bei Erfüllung einer vorbestimmten Bedingung, insbesondere einer vorbestimmten Anzahl von Teigschichten auf der mindestens einen Backwalze, aus dem Herstellungsverfahren entfernt oder in das Herstellungsverfahren einführt werden.

Für eine effiziente Herstellung ist es vorteilhaft, dass die Backwalzen im Normalbetrieb einen vorbestimmten Weg durch Massebehälter und Backkammern nehmen. Durch die Steuerungseinrichtung können Betriebsparameter einzelner Backwälzen oder Massebehälter gezielt beeinflusst werden, um trotz automatischer Herstellung unterschiedliche Kuchen im kontinuierlichen Betriebsablauf herstellen zu können.

Dazu ist es vorteilhaft, wenn eine mit der Steuerungsvorrichtung gekoppelte Messvorrichtung zur Erfassung von Betriebsparametern vorgesehen ist, wobei die Betriebsparameter mindestens einer Backwalze, einer Backkammer und/oder des mindestens einen Massebehälters erfasst werden, so dass die Ansteuerung und/oder die Handhabung mindestens einer Backwalze, einer Backkammer und/oder des mindestens einen Massebehälters in Abhängigkeit von den gemessenen Betriebsparametern erfolgt.

Vorteilhafterweise werden als Betriebsparameter insbesondere Temperaturen mindestens einer Backwalze, die Strahlungsintensität in der Backkammer, der Abstand zwischen Wärmequelle und Backgut, die Temperaturen in der mindestens einen Backkammer, die Temperaturen in der mindestens einen Backkammer, die Temperaturen in dem mindestens einen Massebehälter, die Schichtdicke des Teiges auf mindestens einer Backwalze, die Schaumstruktur der Teigmasse, die Backfarbe, die Viskosität des Backgutes und/oder des Teiges, die Feuchtigkeit des Backgutes und/oder des Teiges und/öder der Füllstand der Teigmasse in dem mindestens einen Massebehälter erfasst. So kann die Temperatur in der mindestens einen Backkammer in Abhängigkeit von den durch die Messvorrichtu*ngen erfassten Betriebsparametern eingestellt werden, insbesondere kann der Abstand einer Wärmequelle von der mindestens einen Backwalze eingestellt werden.

Erfindungsgemäß sind die individualisierenden Kennelemente mindestens teilweise als Barcodes, Matrixcodes, RFID-Marke, Einkerbungen und/oder Profilierungen ausgebildet.

Die Aufgabe wird auch durch eine Anlage zur automatischen Herstellung von Baumkuchen bzw. von Kuchen nacht Baumküchenart mit den Merkmalen des Anspruchs 7 gelöst.

Eine platzsparende Ausführung ergibt sich, wenn die Backkammern mindestens teilweise in unterschiedlichen übereinander liegenden Ebenen angeordnet sind.

Die Flexibilität wird erhöht, wenn der Antrieb mindestens einer Backwalze unabhängig vom Antrieb anderer Backwalzen ansteuerbar ist.

Die Erfindung soll in einem Ausführungsbeispiel anhand einer Zeichnung erläutert werden. Es zeigt:

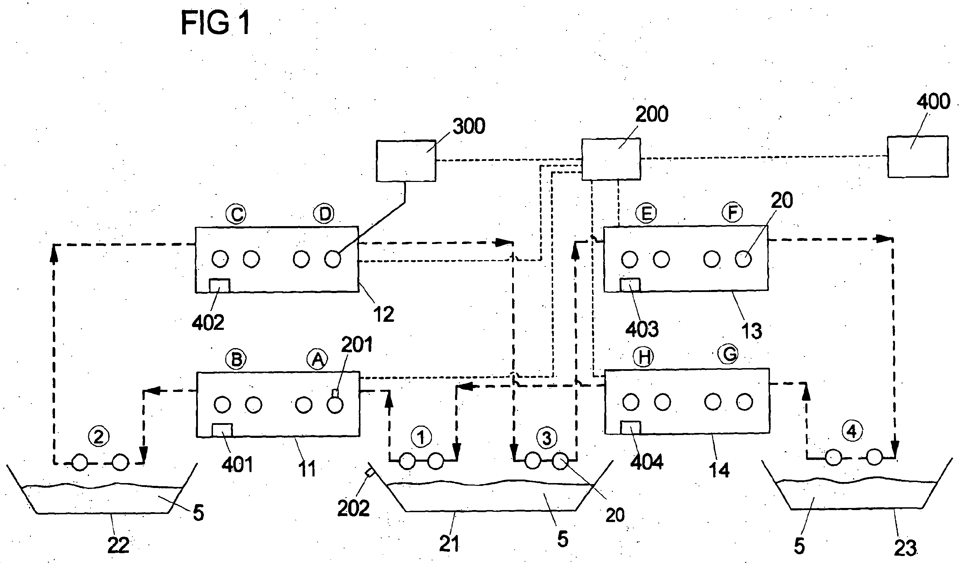

- Fig. 1: schematisch eine Ausführungsform einer Vorrichtung zur automatisierten Herstellung von Baumkuchen bzw. von Kuchen nach Baumkuchenart.

Die hier dargestellte Ausführungsform weist vier Backkammern 11, 12, 13, 14 auf, in denen jeweils Raum für zwei Backwalzenpaare 20 ist. In Fig. 1 sind die Backwalzen 20 als Kreise symbolisiert.

Die Backwalzen 20 werden aus Gründen der Übersichtlichkeit in Fig. 1 nicht mit Antrieben dargestellt, die die Backwalzen während des Herstellungsprozesses in Rotation versetzen. Alle oder einige Backwalzen 20 werden direkt angetrieben, d.h. die Drehzahl und/oder grundsätzlich auch die Drehdauer können einzeln angesteuert werden. Wie später noch erläutert wird, erlaubt die einzelne Ansteuerbarkeit der Backwalzen 20 eine höhere Flexibilität.

Die Backwalzen 20 weisen untereinander einen konstanten Abstand auf. Die Backkammern 11, 12 weisen untereinander einen solchen Abstand auf, dass ein Massebehälter 22 für den Backteig 5 zwischen den Backkammern 12, 13 positioniert werden kann.

In der dargestellten Ausführungsform sind zwei Backkammern 11, 14 in einer unteren ersten Ebene zusammen mit den Massebehältern 21, 22, 23 angeordnet, zwei Backkammern 12, 13 sind in einer zweiten Ebene angeordnet, die vertikal über der ersten Ebene liegt. Die Backwalzen 20 werden, wie noch beschrieben wird, automatisch entlang einem vorbestimmten Weg (in Fig. 1 durch einen gestrichelten Polygonzug mit Pfeilen dargestellt) durch die Backkammern 11, 12, 13, 14 und die Massebehälter 21, 22, 23 geführt.

Die räumliche Anordnung der Backkammern (11, 12, 13, 14) und der Massebehälter (21, 22, 23) kann dabei in weiten Grenzen variiert werden, so dass die Darstellung der Fig. 1 nur eine von vielen Möglichkeiten ist. Eine zumindest teilweise vertikale Anordnung der Backkammern 11, 12, 13, 14 in übereinander liegenden Ebenen, wie in Fig. 1 dargestellt, ist platzsparend. Außerdem ist eine Beabstandung von Massebehältern 21, 22, 23 zu Backkammer 11, 12, 13, 14 sinnvoll, um ein Aufheizen der Teigmasse 5 in den Massebehältern 21, 22, 23 zu vermeiden oder zu minimieren.

Das Herstellungsverfahren für Baumkuchen oder Kuchen nach Baumkuchenart beruht auf einem abwechselnden Auftragen von Teigmasse 5 auf die Backwalzen 20 in den Massebehältern 21, 22, 23 und dem Backen der aufgetragenen Teigschichtschicht in den Backkammern 11, 12, 13, 14. Typischerweise weisen Baumkuchen 10 bis 20 Teigschichten auf.

Im Folgenden wird zunächst die Taktung der Herstellung beschrieben. Dabei sind im vorliegenden Ausführungsbeispiel die Backwalzen 20 (hier jeweils zu Paaren zusammengefasst) und die Massebehälter 21, 22, 23 jeweils mit individualisierenden Kennelementen 201, 202 versehen, die einem Rechner als Steuerungsvorrichtung 200 eine eindeutige Zuordnung der Backwalzen 11, 12, 13, 14 und der Massebehälter (21, 22, 23) erlauben. Aus Gründen der Übersichtlichkeit ist hier nur jeweils ein Kennelement 201, 202 dargestellt.

Bevor die Verwendung der individualisierenden Kennelemente 201, 202 beschrieben wird, soll zunächst einmal der kontinuierliche, in Arbeitstakten aufgegliederte Betriebsablauf dargestellt werden. Die Positionen der Backwalzen 20 bei der Beschickung mit Teigmasse 5 sind mit den Bezugsziffern 1 bis 4 im Kreis versehen. Die Positionen der Backwalzen 20 in den Backkammern 11, 12, 13, 14 sind mit den Buchstaben A bis H in Kreisen versehen. In der dargestellten Ausführungsform wird angenommen, dass die Backkammern 11, 12, 13, 14 grundsätzlich untereinander baugleich sind, was aber nicht zwingend der Fall sein muss.

Der Zyklus beginnt an der ersten Position 1 im ersten Massebehälter 21 (erster Arbeitstakt) . Ein leeres Backwalzenpaar 20 wird hier in die Teigmasse 5 getaucht und gedreht, so dass eine Teigschicht vorgegebener Schichtdicke auf die Backwalze 20 aufgebracht wird. Dieser erste Arbeitstakt wiederholt sich in der Folge für ein neues Backwalzenpaar 20 immer wieder.

Beim zweiten Arbeitstakt wird das im ersten Arbeitstakt beschichtete Backwalzenpaar 20 in die erste Backkammer 11 verbracht und ein neues Backwalzenpaar 20 wird in den ersten Massebehälter 21 eingetaucht und gedreht, so dass sich eine Teigschicht auf dem Backwalzenpaar 20 ablagert.

Die Backwalzen 20 in der ersten Backkammer 11 sind mit einer Drehvorrichtung gekoppelt, die es erlaubt, dass die Backwalzen 20 unabhängig von einander angetrieben werden können; dies gilt hinsichtlich Drehrichtung und Drehgeschwindigkeit.

In der hier beschriebenen Ausführungsform bieten die Backkammern 11, 12, 13, 14 Platz für jeweils zwei Backwalzenpaare, so dass zwei Positionen A, B innerhalb der ersten Backkammer 11 eingenommen werden können. In der Backkammer 11, 12, 13, 14 ist mindestens eine Wärmequelle, z.B. ein Heizstrahler(vorzugsweise Infrarotstrahler), angeordnet, die in definierbarer Weise die Teigschicht auf dem Backwalzenpaar 20 erhitzt und damit bäckt.

Wenn das Backwalzenpaar 20 im dritten Arbeitstakt von der ersten Position A auf die zweite Position B in der ersten Backkammer 11 verbracht wird, wird die erste Position A in der ersten Backkammer 11 frei, so dass ein neues Backwalzenpaar 20 in den ersten Massebehälter 21 nachrücken kann und der oben beschriebene Vorgang der Teigbeschichtung erneut durchgeführt werden kann.

Im Folgenden wird zu Vermeidung von Längen, dass Nachrücken von Backwalzenpaaren 20 bei jedem Arbeitstakt entlang des Pfades durch die Backkammer 11, 12, 13, 14 und Massebehälter nicht mehr expliziert beschrieben, sondern nur der Verfahrensschritt angegeben, der neu durchgeführt wird.

Im vierten Arbeitstakt, in Fig. 1 als Position 2 bezeichnet, wird das aus der ersten Backkammer 11 kommende Backwalzenpaar 20 in den zweiten Massebehälter 22 verbracht und in der Teigmasse 5 gedreht, so dass es dort mit einer weiteren Teigschicht versehen wird, die auf der ersten, bereits ausgebackenen Teigschicht angeordnet wird.

Im fünften und sechsten Arbeitstakt wird das Backwalzenpaar 20 in die zweite Backkammer 12 verbracht, wo es - analog zur ersten Backkammer 11, an den Positionen C und D für eine definierte Zeit gebacken wird.

Im siebten Arbeitstakt wird das nunmehr mit ausgebackenen Teigschichten versehene Backwalzenpaar 20 erneut in den ersten Massebehälter 11 verbracht und dort in der Teigmasse 5 gedreht. Am Ende des siebten Arbeitstaktes ist in der in Fig. 1 mit Position 3 bezeichneten Station eine dritte Teigschicht aufgebracht, die dann im achten und neunten Arbeitstakt in der dritten Brennkammer 13 auf den Positionen E und F ausgebacken wird.

Im zehnten Arbeitstakt wird das Backwalzenpaar 20 in die als . Position 4 bezeichnete Position im dritten Massebehälter 23 verbracht und dort wiederum in der Teigmasse 7 gedreht. Somit wird eine vierte Teigschicht auf die zuvor ausgebackene Teigschicht aufgebracht. Anschließend erfolgt ein Ausbäcken dieser Teigschicht in der vierten Backkammer 13 auf den Positionen G und H (elfter und zwölfter Arbeitstakt).

Nach zwölf Arbeitstakten hat das erste Backwalzenpaar 20 die gesamte Anlage einmal durchlaufen. Grundsätzlich ist es möglich, auch Haltepositiorien für Voll- oder Leerwalzen in den Weg der Backwalzen 20 zu integrieren.

In alternativen Ausführungsformen kann die Führung der Backwalzen 20 durch die Anlage anders gestaltet sein, insbesondere ist es nicht zwingend, den ersten Massebehälter 21 zweimal zu verwenden Massebehälter werden mehrmals verwendet.

Durch entsprechendes Nachrücken von neuen Backwalzenpaaren 20 sind nach zwölf Arbeitstakten alle Positionen in den Backkammern 11, 12, 13, 14 und Massebehältern 21, 22, 23 besetzt.

Wenn der Backvorgang abgeschlossen ist, kann in einer Ausführungsform die Backwalze in eine schnelle Rotation versetzt werden, so dass sich die Teigschichten von der Backwalze 20 ablösen. Sie werden auf Grund der vorhandenen Wärmeenergie denaturieren und sich die charakteristischen Zacken bilden.

In der vorgestellten Ausführungsform beträgt die Taktzeit zwischen 20 und 30 Sekunden. Im Folgenden werden die Herstellung eines Baumkuchens mit zehn Schichten und einer Taktzeit von 23 Sekunden der Energiebedarf und die Energieeinsparung dargelegt.

Bei der dargestellten Ausführungsform werden zur Herstellung der Backwaren 31 Takte benötigt, so dass ein Baumkuchen innerhalb von 713 Sekunden; d.h. in etwas über 11 Minuten hergestellt ist. Insgesamt lassen sich so über 5 Baumkuchen pro Stunde herstellen. Ein Durchlauf entspricht dabei 24 Backwalzen 20 (d.h. 12 Backwalzenpaare), die immer im Einsatz sind. Pro Stunde können mithin über 120 Walzen mit Baumkuchen hergestellt werden.

Wenn man pro Backkammer 11, 12, 13, 14 eine Heizleistung von 78 kW annimmt, benötigt die Gesamtanlage gemäß der Ausführungsform in Fig. 1 insgesamt 312 kW. Wenn jede Backkammer 11, 12, 13, 14 einen Wirkungsgrad von 30% hat, so weist die Gesamtanlage einen Energieverlust von ca. 218 kW, d.h. ca. 1,8 kW .pro Walze, auf.

Bei einer konventionellen Anlage mit 10 Backkammern gleichen Wirkungsgrades, in der 105 Walzen pro Stunde verarbeitet werden, liegt der Energieverlust wesentlich höher, nämlich bei 2,6 kW.

Durch den erhöhten Durchsatz bei geringerer Anzahl von Backkammern 11, 12, 13, 14 kann der Energieverbrauch um 30 bis 35% reduziert werden.

Die Handhabung der Backwalzenpaare 20 und/oder der Massebehälter 21, 22, 23 erfolgt in der dargestellten Ausführungsform zumindest teilweise automatisch durch einen Roboter als Handhabungsvorrichtung 300, gesteuert durch eine Steuerungsvorrichtung 200 (z.B. einen Rechner). In Fig. 1 ist aus Gründen der Einfachheit nur ein Roboter 300 an einer Position dargestellt. Grundsätzlich können mehrere Roboter 300 an unterschiedlichen Positiònen und/oder ein verfahrbarer Roboter 300 eingesetzt werden, um einzelne Backwalzen 20 und/oder Massebehälter zu bewegen.

Der Roboter 300 kann die Backwalzen z.B. in die Backkammern 21, 22, 23, 24 laden oder sie aus ihnen entladen. Auch können Leerwalzen vom Roboter 300 aus einem Register oder Vorheizsystem entnommen werden und in eine wählbare Beschickungsposition gebracht werden.

In der Anlage sind Sensoren 401, 402, 403, 404 verteilt, die bestimmte Betriebsparameter des Herstellungsprozesses messen. Die Sensoren 401, 402, 403, 404 sind in Fig. 1 beispielhaft in den Backkammern 11, 12, 13, 14 angeordnet. Zusätzlich oder alternativ können Sensoren aber auch an anderen Stellen, wie z.B. an oder in den Massebehältern 21, 22, 23 angeordnet sein.

In der dargestellten Ausführungsform können die Sensoren 401, 402, 403, 404 insbesondere Temperaturen der mindestens einen Backwalze 20 und die Temperaturen in mindestens einer der Backkammern 11, 12, 13, 14 messen. Zusätzlich oder alternativ können Sensoren auch die Temperaturen in mindestens einem Massebehälter 21, 22, 23, die Schichtdicke des Teiges auf mindestens einer Backwalze 20, die Schaumstruktur der Teigmasse 5, die Backfarbe, die Viskosität des Backgutes und/oder des Teiges, die Feuchtigkeit des Backgutes und/oder des Teiges und/oder der Füllstand der Teigmasse 5 in mindestens einem Massebehälter 21, 22, 23 sein.

Die Sensoren sind mit einer Messvorrichtung 400. gekoppelt, die z.B. Teil eines Rechners ist, die wiederum mit einer Steuerungsvorrichtung 300 gekoppelt ist. Die Steuerungsvorrichtung 300 sorgt dafür, dass die Herstellung der Backwaren in effizienter Weise erfolgt, wobei sie auf die Messwerte der Betriebsparameter zurückgreift.

Anhand der individualisierenden Kennelemente 201 an den Backwalzen 20 kann die Steuerungsvorrichtung 200 den Backfortschritt jeder Backwalze 20 einzeln erfassen und den Ablauf des Gesämtverfahrens entsprechend beeinflussen.

Die individualisierenden Kennelemente 201, 202 sind z.B. als Barcodes, Matrixcodes, RFID-Marke, magnetischer Marker, Einkerbungen und/oder Profilierungen ausgebildet. Die Kennelemente 201, 202 müssen durch die Steuerungsvorrichtung 200 und ggf. entsprechenden Sensoren eindeutig identifizierbar sein. Die Steuerungsvorrichtung 200 weist eine Datenbank auf, in der u.a. der Sollzustand der Backwalzen 20 und der Istzustand der Backwalzen 20 und/oder Massebehältern 21, 22, 23 gespeichert wird. In Abhängigkeit von den Messwerten kann die gesamte Anlage gesteuert werden.

Auf diese Weise können in einem Durchlauf Backwalzen 20 mit unterschiedlicher Anzahl an Teigschichten hergestellt werden. Die Steuerungsvorrichtung 200 ist darüber orientiert, wie viele Teigschichten auf jeder einzelnen Backwalze 20 aufgetragen wurden. Die Backwalze 20 wird in der beschriebenen Weise solange durch die Backkammern 11, 12, 13, 14 und Massebehälter 21, 22, 23 geschleust, bis die gewünschte Zahl an Teigschichten aufgebracht wurde. Sobald die vorbestimmte Anzahl für eine bestimmte, anhand des individualisierenden Kennelementes 201 erkennbaren Backwalze 20 erreicht ist, wird diese Backwalze 20 durch den Roboter 300, gesteuert durch die Steuervorrichtung 200, gezielt aus der Anlage genommen und eine neue Leerwalze eingesetzt. In analoger Weise können die Massebehälter 21, 22, 23 gesteuert werden, indem bestimmte Massebehälter 21, 22, 23 in Abhängigkeit von Messwerten neu oder anders befüllt werden. Mittels der individualisierenden Kehnelemente 201, 202 ist es auch möglich im laufenden Betrieb, Baumkuchen mit unterschiedlichem Schichtaufbau, d.h. unterschiedlichen Teigen oder Geschmacksrichtungen aufzubauen. In Abhängigkeit von einer eingegeben Rezeptur stellt die Steuerungsvorrichtung 200 sicher, dass z.B. eine bestimmte Backwalze 20 andere Massebehälter 21, 22, 23 durchläuft, um besondere Geschmacksrichtungen oder ein.anderes Erscheinungsbild zu erzeugen. Somit können mit einer Anlage unterschiedliche Baumkuchen kontinuierlich hergestellt werden, wobei es durch die Individualisierung der Backwalzen 20 möglich ist, jede Backwalze 20 nach einem eigenen Rezept zu fahren. (dazu müssen die Massebehälter automatisch ausgefahren werden)

Durch die Zuordnung jeder Backwalze 20 ist der Steuerungsvorrichtung bekannt, wie viele Taktungen diese eine bestimmte Backwalze 20 (oder ein Backwalzenpaar 20) durchlaufen muss und bereits durchlaufen hat. Auch können wahlweise profilierte und glatte Baumkuchen in einer Anlage hergestellt werden, da die Steuerungsvorrichtung 200 genau erkennt, auf welcher Backwalze 20 welches Gut gebacken wird. (Hinterlegung von "Rezepturen" in der Datenbank der Steuerungsvorrichtung 200)

Auch kann die Drehzahl der einzelnen Backwalzen 20 individuell dem Zustand des Backgutes angepasst werden. Photosensoren können z.B. den Bräunungsgrad des Backgutes erfassen und so über die Drehzahl der Backwalze 20 Einfluss auf das Backergebnis zu nehmen. Auch können bei gleichbleibender Taktung die Abstände der Wärmestrahler zum Backgut variiert werden oder die Leistung einzelner Wärmestrahler in Abhängigkeit von Betriebsparametern, z.B. einer gemessenen Feuchte, angepasst werden.

### Bezugszeichenliste

- 1: erste Position in einem Massebehälter
- 2: zweite Position in einem Massebehälter
- 3: dritte Position in einem Massebehälter
- 4: vierte Position in einem Massebehälter,

- 5: Teigmasse

- 11: erste Backkammer
- 12: zweite Backkammer
- 13: dritte Backkammer
- 14: vierte Backkammer

- 20: Backwalze, Backwalzenpaar

- 21: erster Massebehälter
- 22: zweiter Massebehälter
- 23: dritter Massebehälter

- 200: Steuerungsvorrichtung
- 201: individualisierendes Kennelement für Backwalze
- 202: individualisierendes Kennelement für Massebehälter,

- 300: Handhabungsvorrichtung

- 400: Messvorrichtung
- 401-404: Sensoren

- A-H: Position der Backwalzen in Backkammern

## Patentansprüche

1. Verfahren zur automatischen Herstellung von Baumkuchen bzw. von Kuchen nach Baumkuchenart, bei dem mehrere um die eigene Achse rotierende Backwalzen nacheinander abwechselnd durch mindestens einen mit Teigmasse gefüllten Massebehälter und durch mindestens eine Backkammer geführt werden, **dadurch gekennzeichnet, dass** die Backwalzen (20) und/oder der mindestens eine Massebehälter (11, 12, 13) jeweils ein individualisierendes Kennelement (201, 202) aufweisen, das von einer Steuerungsvorrichtung (200) ausgelesen wird und mindestens ein Betriebsparameter mindestens einer Backwalze (20) und/oder des mindestens einen Massebehälters (21, 22, 23) in Abhängigkeit vom Auslesen der Kennelemente (201, 202) verändert wird, wobei eine Handhabungsvorrichtung (300), insbesondere ein Roboter, zur gezielten Bewegung mindestens einer Backwalze (20) und/oder des mindestens einen Massebehälters (21, 22, 23) in Abhängigkeit von dem Ergebnis des Auslesens mindestens eines Kennelements (201, 202) eingesetzt wird, und wobei die individualisierenden Kennelemente (201, 202) mindestens teilweise als Barcodes, Matrixcodes, RFID-Marke, Einkerbungen und/oder Profilierungen ausgebildet sind.

2. Verfahren nach Anspruch 1, **dadurch gekennzeichnet, dass** mindestens eine Backwalze (20) bei einer Erfüllung einer vorbestimmten Bedingung, insbesondere einer vorbestimmten Anzahl von Teigschichten auf der mindestens einen Backwalze (20), aus dem Herstellungsverfahren entfernt oder in das Herstellungsverfahren einführt wird.

3. Verfahren nach Anspruch 1 oder 2, **dadurch gekennzeichnet, dass** die Backwalzen (20) im Normalbetrieb einen vorbestimmten Weg durch Massebehälter (21, 22, 23) und Backkammern (11, 12, 13, 14) nehmen.

4. Verfahren nach mindestens einem der vorhergehenden Ansprüche, **gekennzeichnet durch** eine mit der Steuerungsvorrichtung (200) gekoppelte Messvorrichtung (400) zur Erfassung von Betriebsparametern mindestens einer Backwalze (20), mindestens einer Backkammer (11, 12, 13, 14) und/oder des mindestens einen Massebehälters (21, 22, 23), so dass die Ansteuerung und/oder die Handhabung mindestens einer Backwalze (20), mindestens einer Backkammer und/oder des mindestens einen Massebehälters (21, 21, 23) in Abhängigkeit von den gemessenen Betriebsparametern erfolgt.

5. Verfahren nach mindestens einem der vorhergehenden Ansprüche, **dadurch gekennzeichnet, dass** als Betriebsparameter insbesondere Temperaturen mindestens einer Backwalze (20), die Strahlungsintensität in der Backkammer, der Abstand zwischen Wärmequelle und Backgut, die Temperaturen in der mindestens einen Backkammer (11, 12, 13, 14), die Temperaturen in dem mindestens einen Massebehälter (21, 22, 23), die Schichtdicke des Teiges auf mindestens einer Backwalze (20), die Schaumstruktur der Teigmasse (5), die Backfarbe, die Viskosität des Backgutes und/oder des Teiges, die.Feuchtigkeit des Backgutes und/oder des Teiges und/oder der Füllstand der Teigmasse (5) in dem mindestens einen Massebehälter (21, 22, 23) erfasst.

6. Verfahren nach mindestens einem der vorhergehenden Ansprüche, **dadurch kennzeichnet, dass** die Temperatur in der mindestens einen Backkammer (11, 12, 13, 14) in Abhängigkeit von den durch die Messvorrichtungen (400) erfassten Betriebsparametern eingestellt wird, insbesondere der Abstand einer Wärmequelle von der mindestens einen Backwalze (20).

7. Anlage zur automatischen Herstellung von Baumkuchen bzw. von Kuchen nach Baumkuchenart, mit mehreren, um die eigene Achse rotierbaren Backwalzen und mindestens einem mit Teigmasse füllbaren Massebehälter, **dadurch gekennzeichnet**,' dass
die Backwalzen (20) und/oder der mindestens eine Massebehälter (11, 12, 13) jeweils ein individualisierendes Kennelement (201, 202) aufweisen und eine Steuerungsvorrichtung (200), die für das Auslesen der Kennelemente (201, 202) ausgebildet ist und mindestens ein Betriebsparameter mindestens einer Backwalze (20) und/oder des mindestens einen Massebehälters (21, 22, 23) in Abhängigkeit vom Auslesen der Kennelemente (201, 202) veränderbar ist, wobei eine Handhabungsvorrichtung (300), insbesondere ein Roboter, zur gezielten Bewegung mindestens einer Backwalze (20) und/oder des mindestens einem Massebehälters (21, 22, 23) in Abhängigkeit von dem Ergebnis des Auslesens mindestens eines Kennelements (201, 202) eingesetzt wird, und wobei die individualisierenden Kennelemente (201, 202, 203, 204, 205) mindestens teilweise als Barcodes, Matrixcodes, RFID-Marke, Einkerbungen und/oder Profilierungen ausgebildet sind.

8. Anlage nach Anspruch 7, **dadurch gekennzeichnet, dass** als Betriebsparameter insbesondere Temperaturen mindestens einer Backwalze (20), die Temperaturen in der mindestens einen Backkammer (11, 12, 13, 14), die Temperaturen in dem mindestens einen Massebehälter (21, 22, 23), die Schichtdicke des Teiges auf mindestens einer Backwalze (20), die Schaumstruktur der Teigmasse (5), die Backfarbe, die Viskosität des Backgutes und/oder des Teiges, die Feuchtigkeit des Backgutes und/oder des Teiges und/oder der Füllstand der Teigmasse (5) in dem mindestens einen Massebehälter (21, 22, 23) erfassbar sind.

9. Anlage nach Anspruch 7 oder 8, **dadurch gekennzeichnet, dass** die Messvorrichtung (300) mit einem Sensor (401, 402) zur kapazitiven Feuchtemessung, einem Ultraschall-Sensor (401, 402) zur Messung der Schaumstruktur, einer NIR-Vorrichtung (401, 402) und/oder einem Sensor (401, 402) zur Bestimmung des Proteingehaltes und der Feuchte gekoppelt ist.

10. Anlage nach mindestens einem der vorhergehenden Ansprüche 7 bis 9, **dadurch gekennzeichnet, dass** die Backkammern (11, 12, 13, 14) mindestens teilweise in übereinander liegenden Ebenen angeordnet sind.

11. Anlage nach mindestens einem der vorhergehenden Ansprüche 7 bis 10, **dadurch gekennzeichnet, dass** der Antrieb mindestens einer Backwalze (20) unabhängig vom Antrieb anderer Backwalzen (20) ansteuerbar ist.

## Claims

1. Method for the automated production of tree cakes or cakes in the form of a tree cake wherein multiple baking rollers rotating about their own axis are passed through a mass container filled with dough and through at least one baking chamber one after the other in alternating manner **characterized in that** the baking rollers (20) and/or the at least one mass container (11, 12, 13) comprise in each case an individualized marking element that is read out by a control device (200) and at least one operational parameter of at least one baking roller (20) and/or of the at least one mass container (21, 22, 23) is changed depending on the readout of the marking elements (201, 202), wherein a handling device (300), in particular a robot, for a targeted movement of at least one baking roller (20) and/or the at least one mass container (21, 22, 23) depending on the result of the readout of at least one marking element (201, 202) is used, and wherein the individualized marking elements (201, 202) are formed at least partially as barcodes, matrix codes, or RFID mark, notches and/or profiles.

2. Method according to claim 1, **characterized in that** the at least one baking roller (20) is removed from the production process or is introduced into the production process when a predetermined condition, in particular a pre-determined number of dough layers on the at least one baking roller (20) is fulfilled.

3. Method according to claim 1 or 2, **characterized in that** the baking rollers (20) take a predetermined path through a mass container (21, 22, 23) and baking chambers (11, 12, 13, 14) under normal conditions.

4. Method according to at least one of the preceding claims **characterized by a** measurement device (400) for recording operational parameters of at least one baking roller (20), at least one baking chamber (11, 12, 13, 14) and/or the at least one mass container (21, 22, 23) coupled to the control device (200) such that the control and/or the handling of at least one baking roller (20), at least one baking chamber and/or the at least one mass container (21, 22, 23) occurs depending on the measured operational parameters.

5. Method according to at least one of the preceding claims **characterized in that** as an operational parameter in particular temperatures of at least one baking roller (20), radiation intensity in the baking chamber, the distance between heat source and baking good, the temperatures in the at least one baking chamber (11, 12, 13, 14), the temperatures in the at least one mass container (21, 22, 23), the layer thickness of the dough on at least one baking roller (20), the foam structure of the dough mass (5), the baking color, the viscosity and/or the dough, the moisture of the baking goods and/or the dough and/or the filling level of the dough mass (5) in the at least one mass container (21, 22, 23) is recorded.

6. Method according to at least one of the preceding claims **characterized in that** the temperature in the at least one baking chamber (11, 12, 13, 14) is adjusted depending on the operational parameters recorded by the measurement devices (400), in particular the distance of a heat source from the at least one baking roller (20).

7. System for automatic production of tree cake or cakes in the form of a tree cake with multiple baking rollers rotating about their own axis and at least one mass container which can be filled with a dough mass **characterized in that** the baking rollers (20) and/or the at least one mass container (11, 12, 13) comprise in each case an individualized marking element (201, 202) and a control device (200) which is designed for reading out the marking elements (201, 202) and at least one operational parameter of at least one baking roller (20) and/or the at least on mass container (21, 22, 23) can be changed depending on the readout of the marking elements (201, 202), wherein a handling device (300), in particular a robot, for a targeted movement of at least one baking roller (20) and/or the at least one mass container (21, 22, 23) depending on the result of the readout of at least one marking element (201, 202) is used, and wherein the individualized marking elements (201, 202, 203, 204, 205) are designed at least partially as barcodes, matrix codes, RFID marks, notches and/or profiles.

8. System according to claim 7, **characterized in that** in particular temperatures of at least one baking roller (20), the temperatures in the at least one baking chamber (11, 12, 13, 14), the temperatures in the at least one mass container (21, 22, 23), the layer thickness of the dough on at least one baking roller (20), the foam structure of the dough mass (5), the baking color, the viscosity of the baking goods and/or the dough, the moisture of the baking goods and/or the dough and/or the filling level of the dough mass (5) in the at least one mass container (21, 22, 23) can be recorded as operational parameter.

9. System according to claim 7 or 8, **characterized in that** the measurement device (300) is coupled to a sensor (401,402) for capacitive moisture measurement, an ultrasound sensor (401, 402) for measuring the foam structure, an NIR device (401, 402) and/or a sensor (401, 402) for determining the protein content and the moisture.

10. System according to at least one of the preceding claims 7 to 9, **characterized in that** the baking chambers (11, 12, 13, 14) are arranged at least partially in levels being arranged on top of each other.

11. System according to at least one of the preceding claims 7 to 10, **characterized in that** the drive of at least one baking roller (12) can be controlled independently from the drive of other baking rollers (20).

## Revendications

1. Procédé pour la production automatisée de gâteaux à la broche ou de gâteaux de type gâteau à la broche, dans lequel plusieurs cylindres de cuisson en rotation autour de leur propre axe sont guidés en alternance les uns après les autres à travers au moins un récipient de masse rempli d'une masse de pâte et à travers au moins une chambre de cuisson, **caractérisé en ce que** lès cylindres de cuisson (20) et/ou le au moins un récipient de masse (11, 12, 13) présentent respectivement un élément d'identification (201, 202) personnalisé, qui peut être lu par un dispositif de commande (200), et au moins un paramètre de fonctionnement d'au moins un cylindre de cuisson (20) et/ou du au moins un récipient de masse (21, 22, 23) est modifié en fonction de la lecture des éléments d'identification (201, 202), et dans lequel
un dispositif de manipulation (300), en particulier un robot, servant à déplacer de manière ciblée au moins un cylindre de cuisson (20) et/ou le au moins un récipient de masse (21, 22, 23) en fonction du résultat de lecture d'au moins d'un élément d'identification (201, 202) est prévu, et dans lequel les éléments d'identification (201, 202) personnalisés sont réalisés au moins en partie sous la forme de codes à barres, de codes de matrice, de marqueurs RFID, d'encoches et/ou de profilages.

2. Procédé selon la revendication 1, **caractérisé en ce qu'**au moins un cylindre de cuisson (20) est retiré du procédé de production ou est introduit dans le procédé de production lorsqu'un critère prédéfini est satisfait, en particulier un nombre prédéfini de couches de pâte sur le au moins un cylindre de cuisson (20).

3. Procédé selon la revendication 1 ou 2, **caractérisé en ce que** les cylindres de cuisson (20) empruntent en fonctionnement normal une voie prédéfinie à travers des récipients de masse (21, 22, 23) et à travers des chambres de cuisson (11, 12, 13, 14).

4. Procédé selon au moins l'une quelconque des revendications précédentes, **caractérisé par** un dispositif de mesure (400) couplé au dispositif de commande (200) pour la collecte de paramètres de fonctionnement au moins d'un cylindre de cuisson (20), au moins d'une chambre de cuisson (11, 12, 13, 14) et/ou du au moins un récipient de masse (21, 22, 23) de sorte que la commande et/ou la manipulation d'au moins un cylindre de cuisson (20), d'au moins une chambre de cuisson et/ou du au moins un récipient de masse (21, 22, 23) a lieu en fonction des paramètres de fonctionnement mesurés.

5. Procédé selon au moins l'une quelconque des revendications précédentes, **caractérisé en ce que** sont collectés, en tant que paramètres de fonctionnement, en particulier des températures au moins d'un cylindre de cuisson (20), l'intensité de rayonnement dans la chambre de cuisson, la distance entre la source de chaleur et le produit de cuisson, les températures dans la au moins une chambre de cuisson (11, 12, 13, 14), les températures dans le au moins un récipient de masse (21, 22, 23), l'épaisseur de couche de la pâte sur au moins un cylindre de cuisson (20), la structure mousseuse de la masse de pâte (5), la couleur de cuisson, la viscosité du produit de cuisson et/ou de la pâte, l'humidité du produit de cuisson et/ou de la pâte et/ou l'état de remplissage de la masse de pâte (5) dans le au moins un récipient de masse (21, 22, 23).

6. Procédé selon au moins l'une quelconque des revendications précédentes, **caractérisé en ce que** la température dans la au moins une chambre de cuisson (11, 12, 13, 14) est réglée en fonction des paramètres de fonctionnement détectés par les dispositifs de mesure (400),
en particulier la distance d'une source de chaleur par rapport au au moins un cylindre de cuisson (20).

7. Installation production automatisée de gâteaux à la broche ou de gâteaux de type gâteau à la broche, comprenant plusieurs cylindres de cuisson en rotation autour de leur propre axe, et au moins un récipient de masse pouvant être rempli d'une masse de pâte, **caractérisée en ce que** les cylindres de cuisson (20) et/ou le au moins un récipient de masse (11, 12, 13) présentent respectivement un élément d'identification (201, 202) personnalisé, et un dispositif de commande (200) est prévu pour lire les éléments d'identification (201, 202), et au moins un paramètre de fonctionnement d'au moins un cylindre de cuisson (20) et/ou du au moins un récipient de masse (21, 22, 23 peut être modifié en fonction de la lecture des éléments d'identification (201, 202), et dans lequel
un dispositif de manipulation (300), en particulier un robot pour déplacer de manière ciblée au moins un cylindre de cuisson (20) et/ou le au moins un récipient de masse (21, 22, 23) en fonction du résultat de la lecture d'au moins un élément d'identification (201, 202) est prévu, et dans lequel les éléments d'identification (201, 202, 203, 204, 205) personnalisés sont réalisés au moins en partie sous la forme de codes à barres, de codes de matrice, de marqueurs RFID, d'encoches et/ou de profilages.

8. Installation selon la revendication 7, **caractérisée en ce que** peuvent être collectés, en tant que paramètres de fonctionnement, en particulier des températures au moins d'un cylindre de cuisson (20), les températures dans la au moins une chambre de cuisson (11, 12, 13, 14), les températures dans le au moins un récipient de masse (21, 22, 23), l'épaisseur de couche de la pâte sur au moins un cylindre de cuisson (20), la structure mousseuse de la masse de pâte (5), la couleur de cuisson, la viscosité du produit de cuisson et/ou de la pâte, l'humidité du produit de cuisson et/ou de la pâte et/ou l'état de remplissage de la masse de pâte (5) dans le au moins un récipient de masse (21, 22, 23).

9. Installation selon la revendication 7 ou 8, **caractérisée en ce que** le dispositif de mesure (300) est couplé à un capteur (401, 402) servant à mesurer de manière capacitive l'humidité, à un capteur à ultrasons (401, 402) servant à mesurer la structure mousseuse, à un dispositif NIR (dans le proche infrarouge) (401, 402) et/ou à un capteur (401, 402) servant à déterminer la teneur en protéines et l'humidité.

10. Installation selon au moins l'une quelconque des revendications précédentes 7 à 9, **caractérisée en ce que** les chambres de cuisson (11, 12, 13, 14) sont disposées au moins en partie à des niveaux situés les uns au-dessus des autres.

11. Installation selon au moins l'une quelconque des revendications 7 à 10, **caractérisée en ce que** l'entraînement d'au moins un cylindre de cuisson (20) peut être piloté indépendamment de l'entraînement d'autres cylindres de cuisson (20).
